# EUROPEAN PATENT SPECIFICATION

(11) **EP 3 232 799 B1**
(45) Date of publication and mention of the grant of the patent: **21.08.2019**
(21) Application number: 15830845.2
(22) Date of filing: 15.12.2015
(51) Int. Cl.: A23F 3/00, A23F 5/00, A23L 33/00, B65D 85/808, A23F 3/32

(54) **PROCESS FOR THE PRODUCTION OF A PACKAGED FOOD PRODUCT**
VERFAHREN ZUR HERSTELLUNG EINES VERPACKTEN LEBENSMITTELPRODUKTS
PROCÉDÉ DE PRODUCTION D'UN PRODUIT ALIMENTAIRE ENVELOPPÉ

(30) Priority: 16.12.2014 IT BO20140702; 15.01.2015 IT BO20150003 U; 26.05.2015 IT UB201543371 U
(43) Date of publication of application: 25.10.2017
(73) Proprietor: M.B. Societa' a Responsabilita' Limitata, 20131 Milano (IT)
(72) Inventor: DONATI, Pietro, 47842 San Giovanni in Marignano (Rimini) (IT); VERRI, Marco, 40064 Ozzano dell'Emilia (BO) (IT)
(74) Representative: Falzoni, Davide Aldo
(86) International application number: PCT/IB2015/059619
(87) International publication number: WO 2016/097988

(56) References cited:
- EP-A1- 0 756 844
- WO-A1-2012/168764
- US-A- 5 012 629
- US-A1- 2009 022 855
- US-A1- 2010 313 766
- US-A1- 2014 328 981

## Description

### Technical field

This invention relates to a process for the production of a packaged food product.

### Background art

Packages of infusion material for making beverages, in particular tea, are known in the prior art wherein the loose material is packaged in a bag of biodegradable organic material, such as polyactic acid, and it is used by placing it in infusion in a corresponding cup of hot water. After having been used, the tea bags made of biodegradable material can be disposed of in the organic waste collection container, without any concern regarding the biodegradability of the package.

However this type of packages has a limited use and the consistency of the package is such as to not allow it to be used inside respective infusion machines, in which the material must be inserted in a stationary manner in a respective seat of the machine in which the infusion process occurs.

In practice, the use of the package is limited to uses which require the direct immersion of the bag in the cup which contains the hot water.

There are also prior art pods for infusion material, in particular coffee, which have a rigid consistency that does not allow the use in corresponding infusion machines and wherein the package is defined by an outer case made of aluminium foil, which compresses and firmly holds the material housed inside. In these packages of coffee the outer wrapper is made of non-biodegradable material, and therefore, although containing perfectly compostable product, the package in its entirety cannot be disposed of as waste in a container for collecting organic waste.

Thus, the need is currently felt for having pods or packaged products which can be easily placed as waste in the organic waste container and which at the same time can be easily used for example in respective infusion machines.

The need is also felt of having packages for food products which can be easily used, made, and/or which are of limited cost.

### Summary of the Invention

This invention therefore proposes a new solution as an alternative to the solutions known up to now and, more specifically, proposes to overcome one or more of the above mentioned drawbacks or problems and/or to meet one or more of the needs felt in the trade or inferable from the above.

Accordingly, a wrapped food product is provided, the food product being preferably in the form of an infusion product to obtain a respective beverage, and in particular in the form of a material in the form of powder, granules or pieces, such as coffee, tea, camomile, herbal tea, milk, chocolate or other, wrapped in a respective wrapper; characterised in that the wrapper is made of biodegradable and/or organic film, which is wrapped around and is preferably closely connected, or adherent, to the material.

In this way, it is possible make a package which is entirely compostable and wherein the outer film contains in an efficient manner the material housed therein and which may be advantageously also used directly in corresponding infusion machines.

### Brief description of the drawings

These and other innovative aspects, or specific advantageous features, are set out in the appended claims and its technical features and advantages are apparent from the detailed description which follows of a preferred, advantageous embodiment of it, which must be considered purely as a non-limiting example. the description being made with reference to the accompanying drawings, in which:
- Figure 1 is a perspective view of a preferred embodiment of the product in accordance with this invention;
- Figure 2 is a bottom plan view of the preferred embodiment of the product in accordance with this invention;
- Figure 3 is a top plan view of the preferred embodiment of the product in accordance with this invention;
Figure 4 shows a top plan view of this product before the final forming processing;
- Figure 5 is a side view corresponding to the product of Figure 4;
- Figures 6 and 7 are respective schematic side views of different steps of the process for forming this product;
Figure 8 is a perspective view of a second preferred embodiment of the packaged food product according to this invention.

### Detailed description of preferred embodiments of the invention

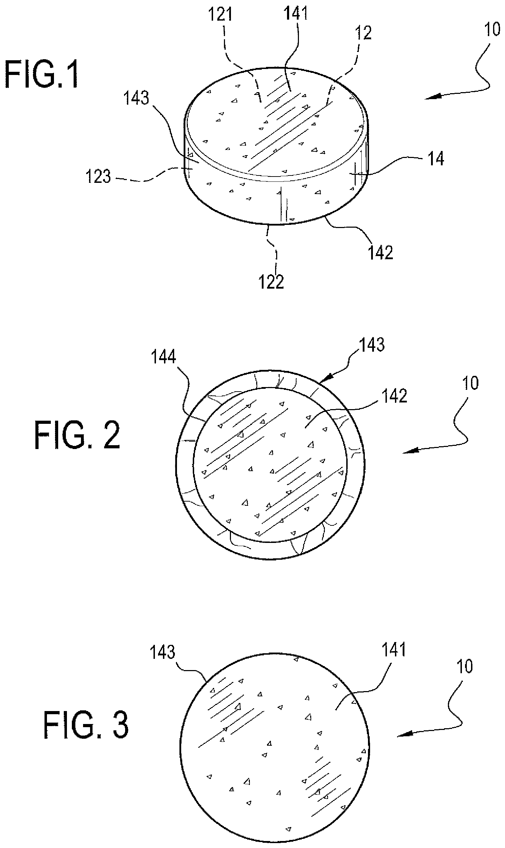

Figure 1 illustrates a preferred embodiment 10 of wrapped food product, the food product preferably being in the form an infusion product in water, in particular which can be carried out in specific infusion machines, for example infusion machines for household use, to obtain an beverage, in particular a hot beverage.

As may also be inferred from Figures 2 to 5, this wrapped food product 10 is in the form of a material in the form of powder, granules or pieces, such as coffee, tea, camomile, or another, which is wrapped in a respective wrapper 14.

However, it will be understood that the food product could also consist of herbal tea, milk, chocolate or others.

Advantageously, the wrapper 14 is made of filtering film, the filtering film being wrapped around and closely connected, or adherent, to the material 12.

The film made of filtering material 14 is permeable to the passage of the infusion liquid and is in the form of a film made of biodegradable and/or compostable and/or organic material, preferably made of polyactic acid or PLA.

Preferably, a filtering film is used, preferably made of PLA, having a weight per square metre of between 80 mg and 110 mg.

Further advantageously, the infusion material is configured like a rigid and compact tablet.

The product is in the form of a product which may be advantageously placed as waste in containers for organic or compostable waste and which may be ready for use, inside respective seats of infusion machines.

Also, advantageously, the wrapped food product is such as to not let drop any residual powder or granules or pieces of the material and it is therefore practical to use and especially desirable.

More specifically, as illustrated, the material 12 has a respective outer surface, preferably comprising opposite transversal end faces, or surfaces, respectively, 121 and 122, and a peripheral surface 123, extending between the opposite transversal end surfaces 121, 122 and, in particular, as illustrated, having an outer circumferential or cylindrical surface 123.

As illustrated, in turn, the transversal end faces 121, 122 are in the form of respective substantially flat surfaces, preferably with a circular perimeter.

More specifically, the wrapper 14 is closely connected, or adherent, to one or more of the outer surfaces of the product, and preferably to the entire outer surface of the product.

For this reason, the wrapper 14 has opposite transversal layers 141, 142 superposing the corresponding transversal end surface 121, 122 of the material 12 and a peripheral surface 143 superposing the corresponding peripheral surface 123 of the material 12.

The wrapper 14 is closely connected, or adherent, to one or more of the outer surfaces of the material, in particular to one or both of the corresponding transversal end surfaces 121, 122 of the material 12 and/or the peripheral surface 123 of the material 12, and preferably is closely connected, or adherent, to the entire outer surface of the material 12.

More specifically, as illustrated, the wrapper 14 has a layer 144 superposing an underlying layer 142 which is closely connected, or adherent, to the material.

More specifically, the layer 144 superposing 142 which is closely connected, or adherent, to the material, is in turn adherent, or connected, to the underlying layer 142 of the wrapper which is closely connected or adherent to the corresponding surface or face of material 122.

More specifically, the layer 144 superposing a closely connected, or adherent underlying layer 142 extends, starting from the respective peripheral edge, for a certain circumferential stretch superposing a layer 142 at the transversal end surface 122 of the material.

As may be inferred, the respective end face of the material and/or the corresponding layer of the closely connected wrapper, in particular both the transversal end faces 121, 122 of the material and/or the corresponding layers 141, 142 of the closely connected wrapper, are in the form of a respective substantially flat surface, preferably with an outer circular profile.

In turn, the perimetric surface of the material 123 and/or of the corresponding superposed layer 143 of the closely connected wrapper is in the form of a surface having a generally cylindrical shape.

Although not specifically illustrated in the accompanying drawings, this wrapped product 10 may be inserted in a corresponding secondary packing, preferably consisting of a second wrapper made of aluminium foil.

In this way, it is possible to maintain the fragrance of the packaged product 10, removing the outer wrapper at the time of using the product 10 in a suitable machine, then disposing of the product as waste in the container for biodegradable waste and the outer packaging, preferably made of aluminium, in another container.

Preferably, the material contained is defined by coffee, in particular in the form of toasted and ground coffee.

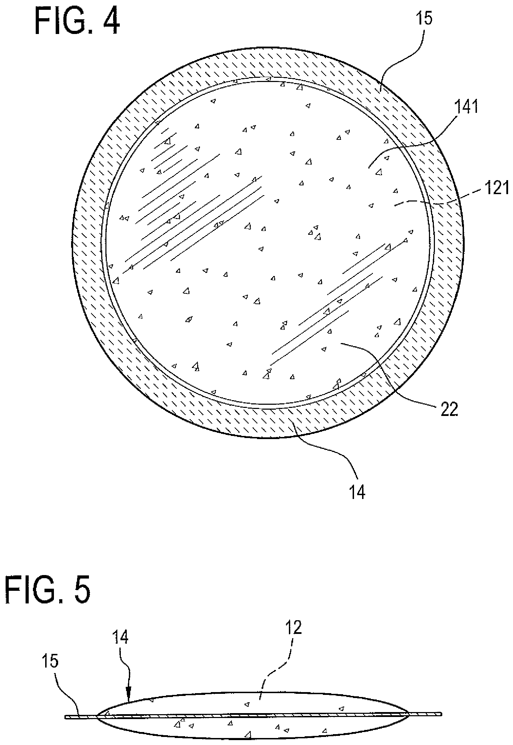

With reference also to Figures 4 to 7, an advantageous process may be inferred for making a wrapped food product 10, as recited in the appended claims.

The material which is introduced inside the wrapper 14 is preferably in a loose and/or substantially non-aggregated condition.

According to the process, energy is supplied to the wrapper 14 with the material contained 12 until connecting closely, or adhering, the wrapper 14 to the wrapper 12.

Preferably, the material processed according to this invention, that is, the material contained in the wrapper, is defined by coffee, in particular in the form of toasted and ground coffee.

Advantageously, by means of the energy supplied to the wrapper 14 with the material contained 12, a rigid and compact tablet of the material 12 is obtained.

Advantageously, according to the process, the energy supplied to the wrapper 14 with the material contained 12 is in the form of vibrational mechanical energy, in particular in the form of ultrasonic energy.

In any case, advantageously, according to the process, the energy supplied to the wrapper 14 with the material contained 12 is such as not to destroy or damage the wrapper 14.

More specifically, vibrational mechanical energy is supplied at a frequency of between 16,000 and 35,000 Hertz.

According to the process, energy is supplied to the wrapper with the material contained at between 500 and 6,000 Joules, preferably between 1,200 and 3,000 Joules, and in particular suitably selectable as a function of the weight of the portion of infusion material processed.

Preferably, the portion of infusion material processed and inserted inside a specific wrapper 14 has a weight of between 5 and 25 g.

However, in certain specific cases, the weight of the portion of infusion material inserted inside the wrapper 14 could also be greater and purely by way of an example the weight of the portion of infusion material processed and inserted inside a specific wrapper 14 could also be around 30 g.

More specifically, according to the process, energy is supplied to the wrapper with the material contained for a time of between 0.5 and 20 seconds, preferably between 2 and 6 seconds.

As illustrated, to form appropriately the packaged food product, according to the process, the wrapper 14 is positioned with the material contained 12 in a respective mould 20 having a respective seat 22 for receiving, or forming, the wrapper 14 with the material contained 12.

According to the process, the wrapper 14 with the product contained 12 is pushed into the respective seat 22 of the mould 20.

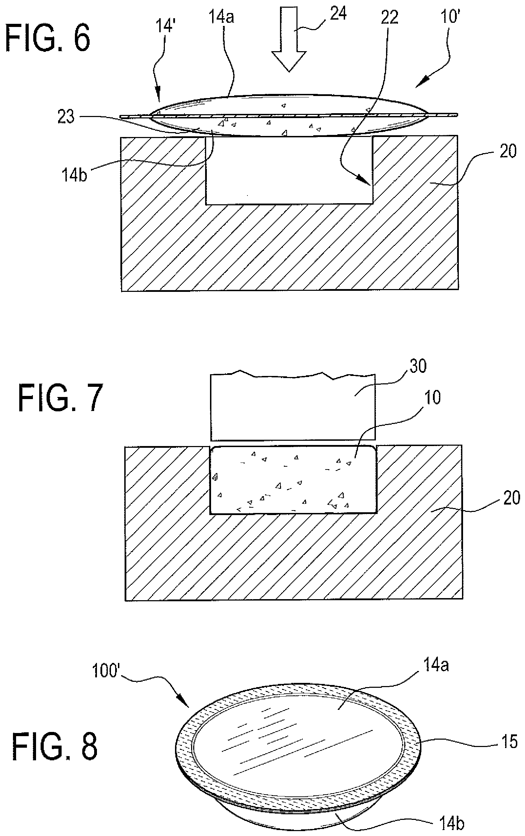

To perform this operation use is made of corresponding pusher means, embodied by way of an example in Figure 6 by a corresponding arrow 24.

As may be inferred from Figures 6 and 7, the product in the extended condition 10', that is, the wrapper 14 with the material contained 12, before inserting into the respective seat 22 of the mould 20, protrudes peripherally beyond the inlet opening 23 in the seat 22, and following the insertion in the seat of the mould has at least one peripheral end portion 144 of the protruding portion of the wrapper which superposes a layer 142 of the wrapper which is in direct contact with the material contained 12, that is, of a layer 142 which engages an end transversal face 122 of the material.

As illustrated, advantageously, the wrapper 14, in particular before inserting in the mould 20, hermetically contains the material contained.

Subsequently, the means for supplying vibrational mechanical energy 30, in particular a sonotrode device, supply energy to the wrapper 14 with the material contained 12 positioned inside the seat 22 of the respective mould 20, in particular until obtaining the wrapped food product, wherein the wrapper is closely connected, or adherent, to the material contained and wherein the material contained is substantially shaped like a rigid and compact tablet.

More specifically, as illustrated, the wrapper 14 comprises respective means 15 for closing the portion of material inside the wrapper.

More specifically, according to this preferred embodiment, the closing means 15 comprise one or more edges superposed and joined to each other, in particular of corresponding layers 14a, 14b of the wrapper.

More specifically, as illustrated, the closing means 15 comprise a first and a second layer 14a, 14b of wrapper having respective peripheral edges superposed and joined to each other to define respective closing means or edge 15.

According to a further embodiment not illustrated in the accompanying drawings, it would also be imaginable that the closing means 15 comprise one or more edges superposed and joined together of a layer or sheet of wrapper, which is wound around the material.

In this case, it is imaginable the closing means comprise respective transversal end edges defined by portions superposed and joined together of the layer of wrapper and a respective longitudinal edge which extends between and from the transversal end edges and which would be defined by lateral end portions superposed and joined together of the sheet or wrapper.

Figure 8 illustrates a second preferred embodiment of the product in the extended condition 100', that is, of the wrapper 14 with the material contained 12, before inserting in the respective seat 22 of the mould 20, which has components similar, or equivalent, to those of the preferred embodiment described above, and which are denoted by the same reference numerals and which, for brevity and convenience, are not described again in detail.

The second preferred embodiment of product is obtained preparing a tray of a lower layer 14b the wrapper, in which is provided the food material 12 in loose condition, and applying on this a respective sheet or layer, preferably flat 14a, which is joined to the lower layer 14a along the respective outer perimeter defining corresponding closing means 15.

Basically, according to the respective process of this second preferred embodiment, a lower layer of the wrapper 14b is prepared shaped in the form of a tray, that is, such as to define a respective seat for housing the food material 12 in loose condition, and on this layer shaped like a tray 14b, and containing the food material 12 in loose condition, is applied a respective sheet or layer, preferably flat 14a, which is joined to the lower layer 14b along the respective outer perimeter defining corresponding means 15 of closing the package or wrapper.

### EXAMPLE EMBODIMENT 1

5.5 grams of toasted and ground coffee are introduced, in loose condition, in a wrapper made of PLA, which completely wraps around the coffee and it is all inserted in a suitable mould.

The product is subjected to ultrasonic stress, using a corresponding sonotrode device, which gives off a sound vibration at a frequency of approximately 20,000 Hertz with a predetermined energy equal to 800-900 Joules for a length of time of 2-3 seconds.

A tablet of coated coffee is obtained, having the features illustrated in Figure 1 and it maintains that configuration permanently, in which the particles of product for infusion are directly connected to or adhering to one another and the outer wrapper made of PLA adheres to the coffee.

### EXAMPLE EMBODIMENT 2

7.5 grams of toasted and ground coffee are introduced, in loose condition, in a wrapper made of PLA, which completely wraps around the coffee and it is all inserted in a suitable mould.

The product is subjected to ultrasonic stress, using a corresponding sonotrode device, which gives off a sound vibration at a frequency of approximately 20,000 Hertz with a predetermined energy equal to 1,300 Joules for a length of time of 4 seconds.

A tablet of coated coffee is obtained, having the features illustrated in Figure 1 and it maintains that configuration permanently, in which the particles of product for infusion are directly connected to or adhering to one another and the outer wrapper made of PLA adheres to the coffee.

### EXAMPLE EMBODIMENT 3

7.5 grams of toasted and ground coffee are introduced, in loose condition, in a wrapper made of PLA, which completely wraps around the coffee and it is all inserted in a suitable mould.

The product is subjected to ultrasonic stress, using a corresponding sonotrode device, which gives off a sound vibration at a frequency of approximately 20,000 Hertz with a predetermined energy equal to 1,900 Joules for a length of time of 5-6 seconds.

A tablet of coated coffee is obtained, having the features illustrated in Figure 1 and it maintains that configuration permanently, in which the particles of product for infusion are directly connected to or adhering to one another and the outer wrapper made of PLA adheres to the coffee.

However, it must also be understood that by using levels of ultrasound energy or stress times reduced more than those illustrated above it is in any case possible to obtain an aggregation, even though to a lesser extent, of the particles of raw material or coffee, which allows in any case a product to be obtained which is sufficiently compact and which can be easily used by the end user.

### EXAMPLE EMBODIMENT 4

5.5 grams of toasted and ground coffee are introduced, in loose condition, in a wrapper made of PLA, which completely wraps around the coffee and it is all inserted in a suitable mould.

The product is subjected to ultrasonic stress, using a corresponding sonotrode device, which gives off a sound vibration at a frequency of approximately 20,000 Hertz with a predetermined energy equal to 500-600 Joules for a length of time of 1.5-2 seconds.

A tablet of coated coffee is obtained having particles of product for infusion which are directly connected to or adhering to one another and the outer wrapper made of PLA adheres to the coffee, even though the degree of compaction of the whole is reduced.

It would be obvious to one skilled in the art that several changes and/or modifications can be made to the invention without departing from the scope of the invention, described in the appended claims.

## Claims

1. A process for the production of a packaged food product (10), wherein the food product (12) is in the form of an infusion product to obtain a respective beverage, and in particular in the form of a material in the form of powder, granules or pieces, such as coffee, tea, camomile, herbal tea, milk, chocolate, or other; wherein:
- a predetermined portion of the material (12) is introduced into a respective wrapper (14) made of biodegradable and/or organic film, and energy is supplied to the wrapper (14) with the material contained (12), up to making the wrapper (14) closely connect, or adhere, to the material (12);
- by means of the energy supplied to the wrapper (14) with the material contained (12), a rigid and compact tablet of the material (12) is obtained, and in that the wrapper (14), in particular before inserting in a respective mould,_hermetically contains the material contained (12);
**characterised in that**:
- the wrapper (14) with the material contained (12) is placed in a respective mould (20) having a respective seat (22) for receiving the wrapper (14) with the material contained (12);
- the method comprises pushing the wrapper (14) with the product contained (12) into the respective seat (22) of the mould (20);
- the wrapper (14) with the material contained (12), before inserting into the respective seat (22) of the mould (20), protrudes peripherally beyond the inlet opening (23) of the seat (22), and following the insertion in the seat of the mould, has at least one peripheral end portion (144) of the protruding portion which superposes a layer (142) of the wrapper which is in direct contact with the material contained (12).

2. The process according to claim 1, **characterised in that** the energy supplied to the wrapper (14) with the material contained (12) is in the form of vibrational energy, in particular ultrasonic energy.

3. The process according according to any one of the preceding claims, **characterised in that** corresponding means are used designed for supplying vibrational mechanical energy to the wrapper (14) with the material contained (12), in particular in the form of a respective sonotrode device (30), in particular operating on the wrapper (14) with the material contained (12) positioned inside a respective mould (20).

4. The process according to claim 3, **characterised in that** the wrapper (14) comprises respective means (15) for closing the portion of material inside the wrapper.

5. The process according to claim 4, **characterised in that** the closing means (15) comprise one or more edges superposed and joined to each other of corresponding layers (14a, 14b) of the wrapper.

6. The process according to claim 4 or 5, **characterised in that** the closing means comprise a first and a second layer (14a, 14b) of wrapper having respective peripheral edges superposed and joined together.

7. The process according to any one of the preceding claims, **characterised in that** vibrational mechanical energy is supplied to the wrapper with the material contained at a frequency of between 16,000 and 35,000 Hertz, and/or **in that** energy is supplied to the wrapper with the material contained at between 500 and 6000 Joules, preferably between 1200 and 3000 Joules, and/or **in that** energy is supplied to the wrapper with the material contained for a period of time between 0.5 and 20 seconds, and preferably between 2 and 6 seconds.

8. The process according to any one of the preceding claims, **characterised in that** the portion of infusion material processed and inserted inside a specific wrapper (14) has a weight of between 5 and 25 g.

9. The process according to any one of the preceding claims, **characterised in that** the wrapper (14) is made of filtering film.

10. The process according to any one of the preceding claims, **characterised in that** the wrapper (14) is made of PLA.

11. The process according to any one of the preceding claims, **characterised in that** a filtering film is used, preferably made of PLA, having a weight per square metre of between 80 mg and 110 mg.

12. The process according to any one of the preceding claims, **characterised in that** it a lower layer of the wrapper (14b) is prepared shaped in the form of a tray, that is, such as to define a respective seat for housing the food material (12) in loose condition, and **in that** on this layer shaped like a tray (14b), containing the food material (12) in loose condition, is applied a respective sheet or layer, preferably flat (14a), which is joined to the lower layer (14b) along the respective outer perimeter defining corresponding means (15) of closing the package or wrapper.

## Patentansprüche

1. Verfahren zur Herstellung eines verpackten Lebensmittelprodukts (10), wobei das Lebensmittelprodukt (12) die Form eines Aufgussprodukts aufweist, um ein jeweiliges Getränk zu erhalten, insbesondere in Form eines Materials in Form von Pulver, Granulat oder Stücken wie Kaffee, Tee, Kamillentee, Kräutertee, Milch, Schokolade oder Sonstiges, wobei
- eine vorgegebene Portion des Materials (12) in eine jeweilige Hülle (14) eingefügt wird, die aus einer biologisch abbaubaren und/oder einer organischen Folie besteht, und der Hülle (14) mit dem enthaltenen Material (12) Energie zugeführt wird, sodass die Hülle (14) nah mit dem Material (12) verbunden wird oder an diesem haftet;
- mittels der der Hülle (14) mit dem enthaltenen Material (12) zugeführten Energie eine starre und kompakte Tablette aus dem Material (12) erhalten wird, wobei die Hülle (14), insbesondere bevor sie in eine jeweilige Form eingefügt wird, hermetisch das enthaltene Material (12) enthält,
**dadurch gekennzeichnet, dass**
- die Hülle (14) mit dem enthaltenen Material (12) in einer jeweiligen Form (20) platziert wird, aufweisend eine jeweilige Aufnahme (22) zum Aufnehmen der Hülle (14) mit dem enthaltenen Material (12);
- das Verfahren das Drücken der Hülle (14) mit dem enthaltenen Produkt (12) in die jeweilige Aufnahme (22) der Form (20) umfasst;
- die Hülle (14) mit dem enthaltenen Material (12) vor dem Einfügen in die jeweilige Aufnahme (22) der Form (20) umfangseitig jenseits der Einlassöffnung (23) der Aufnahme (22) hervorsteht und nach dem Einfügen in die Aufnahme der Form mindestens einen umfangseitigen Endabschnitt (144) des hervorstehenden Abschnitts aufweist, der über einer Schicht (142) der Hülle angeordnet ist, die in direktem Kontakt mit dem enthaltenen Material (12) ist.

2. Verfahren nach Anspruch 1, **dadurch gekennzeichnet, dass** die der Hülle (14) mit dem enthaltenen Material (12) zugeführte Energie die Form von Vibrationsenergie, insbesondere Ultraschallenergie, aufweist.

3. Verfahren nach einem der vorhergehenden Ansprüche, **dadurch gekennzeichnet, dass** die entsprechenden Mittel genutzt und ausgestaltet sind, um der Hülle (14) mit dem enthaltenen Material (12) mechanische Vibrationsenergie zuzuführen, insbesondere in Form einer Sonotrodenvorrichtung (30), die insbesondere auf die Hülle (14) mit dem enthaltenen Material (12), positioniert in einer jeweiligen Form (20), wirkt.

4. Verfahren nach Anspruch 3, **dadurch gekennzeichnet, dass** die Hülle (14) jeweilige Mittel (15) zum Verschließen der Materialportion in der Hülle umfasst.

5. Verfahren nach Anspruch 4, **dadurch gekennzeichnet, dass** die Verschließmittel (15) eine oder mehrere Kanten entsprechender Schichten (14a, 14b) der Hülle umfassen, die übereinander angeordnet und zusammengefügt sind.

6. Verfahren nach Anspruch 4 oder 5, **dadurch gekennzeichnet, dass** die Verschließmittel eine erste und eine zweite Schicht (14a, 14b) einer Hülle umfassen, aufweisend jeweilige umfangseitige Kanten, die übereinander angeordnet und zusammengefügt sind.

7. Verfahren nach einem der vorhergehenden Ansprüche, **dadurch gekennzeichnet, dass** die mechanische Vibrationsenergie der Hülle mit dem enthaltenen Material bei einer Frequenz zwischen 16.000 und 35.000 Hz zugeführt wird, und/oder dadurch, dass der Hülle mit dem enthaltenen Material Energie zwischen 500 und 6000 Joules, vorzugsweise zwischen 1200 und 3000 Joules zugeführt wird, und/oder dadurch, dass die Energie der Hülle mit dem enthaltenen Material für einen Zeitraum zwischen 0,5 und 20 Sekunden, vorzugsweise zwischen 2 und 6 Sekunden, zugeführt wird.

8. Verfahren nach einem der vorhergehenden Ansprüche, **dadurch gekennzeichnet, dass** die Portion von bearbeitetem und in eine spezifische Hülle (14) eingefügtem Aufgussmaterial ein Gewicht zwischen 5 und 25 g aufweist.

9. Verfahren nach einem der vorhergehenden Ansprüche, **dadurch gekennzeichnet, dass** die Hülle (14) aus einer Filterfolie besteht.

10. Verfahren nach einem der vorhergehenden Ansprüche, **dadurch gekennzeichnet, dass** die Hülle (14) aus PLA besteht.

11. Verfahren nach einem der vorhergehenden Ansprüche, **dadurch gekennzeichnet, dass** eine Filterfolie genutzt wird, vorzugsweise bestehend aus PLA, aufweisend ein Gewicht pro Quadratmeter zwischen 80 mg und 110 mg.

12. Verfahren nach einem der vorhergehenden Ansprüche, **dadurch gekennzeichnet, dass** eine untere Schicht der Hülle (14b) in Form einer Schale vorbereitet geformt ist, sodass sie eine jeweilige Aufnahme zur Unterbringung des Nahrungsmittelmaterials (12) in losem Zustand definiert, und dadurch, dass auf dieser Schicht, die wie eine Schale (14) geformt ist und die das Nahrungsmittelmaterial (12) in losem Zustand enthalt, ein jeweiliges Blatt oder Schicht angebracht wird, vorzugsweise flach (14a), das/die mit der unteren Schicht (14b) entlang des jeweiligen äußeren Umfangs zusammengefügt ist, definierend entsprechende Mittel (15) zum Verschließen der Verpackung oder Hülle.

## Revendications

1. Procédé de production d'un produit alimentaire enveloppé (10), dans lequel le produit alimentaire (12) se présente sous la forme d'un produit d'infusion pour obtenir une boisson respective, et en particulier sous la forme d'une matière sous forme de poudre, granulés ou morceaux telle que le café, le thé, la camomille, la tisane, le lait, le chocolat ou autre ; dans lequel :
- une partie prédéterminée de matière (12) est introduite dans une enveloppe (14) respective constituée d'un film biodégradable et/ou organique, et l'énergie est fournie à l'enveloppe (14) avec la matière (12) contenue, jusqu'à ce que l'enveloppe (14) se relie étroitement ou adhère à la matière (12) ;
- au moyen de l'énergie fournie à l'enveloppe (14) avec la matière (12) contenue, une tablette rigide et compacte de matière (12) est obtenue, et en ce que l'enveloppe (14), en particulier avant l'introduction dans un moule respectif, contient hermétiquement la matière (12) contenue ;
**caractérisé en ce que** :
- l'enveloppe (14) avec la matière (12) contenue est placée dans un moule (20) respectif comportant un siège (22) respectif pour recevoir l'enveloppe (14) avec la matière (12) contenue ;
- le procédé comprend la poussée de l'enveloppe (14) avec le produit (12) contenu dans le siège (22) respectif du moule (20) ;
- l'enveloppe (14) avec la matière (12) contenue, avant l'introduction dans le siège (22) respectif du moule (20), dépasse sur la périphérie au-delà de l'ouverture d'entrée (23) du siège (22), et suite à l'introduction dans le siège du moule, comporte au moins une partie terminale périphérique (144) de la partie en saillie qui se superpose à une couche (142) de l'enveloppe étant en contact direct avec la matière (12) contenue.

2. Procédé selon la revendication 1, **caractérisé en ce que** l'énergie fournie à l'enveloppe (14) avec la matière (12) contenue est sous forme d'énergie vibrationnelle, en particulier d'énergie ultrasonique.

3. Procédé selon l'une quelconque des revendications précédentes, **caractérisé en ce que** les moyens correspondants sont utilisés et conçus pour fournir l'énergie mécanique de vibration à l'enveloppe (14) avec la matière (12) contenue, en particulier sous la forme d'un dispositif sonotrode (30) respectif, agissant en particulier sur l'enveloppe (14) avec la matière (12) contenue, positionné à l'intérieur d'un moule (20) respectif.

4. Procédé selon la revendication 3, **caractérisé en ce que** l'enveloppe (14) comprend des moyens (15) respectifs servant à fermer la partie de matière à l'intérieur de l'enveloppe.

5. Procédé selon la revendication 4, **caractérisé en ce que** les moyens de fermeture (15) comprennent un ou plusieurs bords superposés et joints entre eux de couches (14a, 14b) correspondantes de l'enveloppe.

6. Procédé selon la revendication 4 ou 5, **caractérisé en ce que** les moyens de fermeture comprennent une première et une seconde couche (14a, 14b) d'enveloppe comportant des bords périphériques respectifs superposés et joints entre eux.

7. Procédé selon l'une quelconque des revendications précédentes, **caractérisé en ce que** l'énergie mécanique vibrationnelle est fournie à l'enveloppe avec la matière contenue à une fréquence comprise entre 16 000 et 35 000 hertz, et/ou **en ce que** l'énergie est fournie à l'enveloppe avec la matière contenue entre 500 et 6 000 joules, de préférence entre 1 200 et 3 000 joules, et/ou **en ce que** l'énergie est fournie à l'enveloppe avec la matière contenue pendant une période de temps comprise entre 0,5 et 20 secondes, de préférence entre 2 et 6 secondes.

8. Procédé selon l'une quelconque des revendications précédentes, **caractérisé en ce que** la partie de matière d'infusion traitée et introduite à l'intérieur d'une enveloppe (14) spécifique a un poids compris entre 5 et 25 g.

9. Procédé selon l'une quelconque des revendications précédentes, **caractérisé en ce que** l'enveloppe (14) est constituée d'un film filtrant.

10. Procédé selon l'une quelconque des revendications précédentes, **caractérisé en ce que** l'enveloppe (14) est constituée de PLA.

11. Procédé selon l'une quelconque des revendications précédentes, **caractérisé en ce qu'**un film filtrant utilisé, de préférence constitué de PLA, a un poids par mètre carré compris entre 80 mg et 110 mg.

12. Procédé selon l'une quelconque des revendications précédentes, **caractérisé en ce qu'**une couche inférieure de l'enveloppe (14b) est préparée façonnée sous la forme d'un plateau, c'est-à-dire, de manière à définir un siège respectif pour loger la matière alimentaire (12) en vrac, et **en ce que** sur cette couche façonnée comme un plateau (14b), contenant la matière alimentaire (12) en vrac, est appliquée une feuille respective ou couche, de préférence plate (14a), étant jointe à la couche inférieure (14b) le long du périmètre extérieur respectif définissant des moyens (15) correspondants de fermeture de l'emballage ou de l'enveloppe.
